# EUROPÄISCHE PATENTSCHRIFT

(11) **EP 1 454 798 B1**
(45) Veröffentlichungstag und Bekanntmachung des Hinweises auf die Patenterteilung: **04.08.2010**
(21) Anmeldenummer: 04004913.2
(22) Anmeldetag: 03.03.2004
(51) Int. Cl.: B60R 16/02, H02J 7/14, H01J 1/10

(54) **Verfahren und Vorrichtung zur spannungsrichtigen elektrischen Verbindung von verschiedenen Spannungsebenen, insbesondere bei der Fremdversorgung in Bordnetzen von Kraftfahrzeugen**
Method and device for selectively performing the right connection of different voltage levels, especially by power supply of external load in on-board networks of vehicles
Méthode et dispositif pour la connexion sélective à differents niveaux de tension, en particulier pour l'alimentation de charge externe dans des réseaux embarqués pour véhicules

(30) Priorität: 07.03.2003 DE 10310400
(43) Veröffentlichungstag der Anmeldung: 08.09.2004
(73) Patentinhaber: Auto-Kabel Managementgesellschaft mbH, 79688 Hausen i.W. (DE)
(72) Erfinder: Gronwald, Frank, Dipl.-Ing., 50181 Bedburg (DE); Stracke, Rolf, Dipl.-Ing. FH, 79539 Lörrach-Stetten (DE)
(74) Vertreter: Schippan, Ralph

(56) Entgegenhaltungen:
- WO-A-01/23216

## Beschreibung

Die Erfindung betrifft eine Vorrichtung zur elektrischen Verbindung einer Gleichspannungsquelle oder -senke mit mindestens einem Verbrauchernetz einer jeweils vorgegebenen Spannungsebene (14V, 42V) sowie ein hierauf gerichtetes Verfahren.

Neben dem heute üblichen Bordnetz von Kraftfahrzeugen, welches eine Versorgungsspannung von 14V aufweist, gibt es bereits Entwicklungen, die Kfz-Bordnetzspannung auf 42V zu erhöhen. Da für das 42V-Bordnetz lange Entwicklungszeiten und hohe Entwicklungskosten anzusetzen sind, wird mindestens in einer Übergangsphase das bisherige 14V-Bordspannungsnetz parallel zum 42V-Bordspannungsnetz im Fahrzeug existieren. Für die Versorgung eines solchen "dualen" Netzes sind dann mindestens zwei Batterien mit voneinander unterschiedlicher Nennspannung (12V bzw. 36V) erforderlich. Dies führt zu Platzproblemen, so dass die Batterien nicht im Motorraum sondern vollständig oder teilweise im Kofferraum des Fahrzeuges untergebracht werden müssen. Im Fahrzeug wird dann ein leicht zugänglicher Fremdstartstützpunkt untergebracht sein, an dem beispielsweise eine externe Batterie für die Ladung der Bordnetzbatterie angeschlossen wird zur Durchführung einer Fremdladung. Andererseits kann auch im Falle eines Fremdstartes, bei der ein fremdes Fahrzeug von der vorhandenen Bordnetzbatterie gestartet werden soll, der Anschluß erfolgen.

Hierbei besteht aufgrund der unterschiedlichen Nennspannungen die Gefahr einer spannungsunrichtigen Kopplung von Bordnetzbatterie und externer Batterie. Spannungsabweichungen führen sowohl dann, wenn die externe Spannung größer ist als die Nennspannung auch dann, wenn sie kleiner ist, zu einem Quasi-Kurzschluss zwischen Quelle und Senke, so dass hierdurch Schädigungen hervorgerufen werden können, z.B. die thermische Zerstörung stromführender Komponenten oder eine Explosion einer der beiden Batterien.

Das Dokument WO 01/23216 zeigt den Oberbegriff des Anspruchs 1.

Demzufolge liegt der vorliegenden Erfindung die Aufgabe zugrunde, eine Vorrichtung bzw. ein Verfahren der eingangs genannten Art dahingehend zu verbessern, dass sich die Betriebssicherheit gegen spannungsunrichtigen Anschluss von Gleichspannungsquelle bzw. Gleichspannungssenke verbessert.

Diese Aufgabe wird erfindungsgemäß durch eine Vorrichtung gemäß dem gegenstand des Anspruchs 1 gelöst.

Bei einem Verfahren der eingangs genannten Art wird dies durch die Merkmale des Anspruchs 11 gelöst.

Die Erfindung zeichnet sich dadurch aus, dass durch die Überwachung des Spannungswertes am Eingangszweipol und dem Vergleich des gemessenen Wertes mit einem Sollwert bzw. Toleranzbereich nur dann eine elektrische Verbindung zwischen dem Eingangszweipol und einem Verbrauchernetz erfolgt, wenn die spannungsrichtige Zuordnung gewährleistet ist. Dabei kann neben einer fehlerhaften Spannungsamplitude auch eine fehlerhafte Polarität der an den Eingangszweipol gelegten Gleichspannungsquelle bzw. - senke festgestellt werden. Die erfindungsgemäße Lösung läßt sowohl die Variante zu, dass am Eingangszweipol eine Gleichspannungsquelle anliegt und somit das Verbrauchernetz von der Gleichspannungsquelle im Sinne einer Fremdladung versorgt wird. Andererseits kann auch vorgesehen sein, dass eine Gleichspannungssenke am Eingangszweipol angeschlossen ist, beispielsweise dann, wenn ein externer Verbraucher vom Bordnetz im Sinne eines Fremdstarts versorgt werden soll. Von besonderer Bedeutung für die Erfindung ist dabei, dass außerhalb des Zustandes, in dem das gesteuerte Verbindungsmittel Eingangs- und Ausgangszweipol verbindet, eine hochohmige Verbindung zwischen dem Eingangszweipol und dem mindestens einen Ausgangszweipol vorliegt, so dass eine hohe Betriebssicherheit gegeben ist, da über das Verbindungsmittel kein Stromfluss erflogt. Dies ist beispielsweise von Bedeutung, wenn ein Crashfall eintritt.

Bevorzugte Ausführungsformen der Erfindung gehen aus den Unteransprüchen hervor:

Dabei ist der bevorzugte Anwendungsfall der Erfindung, dass das Verbrauchernetz das Bordnetz eines Fahrzeugs ist. Neben dem Einsatz in Kraftfahrzeugen ist dabei auch eine Anwendung in Lastkraftwagen oder Nutzfahrzeugen möglich.

Bevorzugte Verbrauchernetze sind das 14V-Bordnetz oder das 42V-Bordnetz eines Fahrzeugs, wobei auch ein kombiniertes Bordnetz mit mehreren Spannungsebenen, beispielsweise ein sogenanntes duales Bordnetz mit 14 und 42V vorgesehen sein kann. Andere Beispiele sind ein LKW-Bordnetz mit 24V oder ein Bordnetz für ein Fahrzeug mit Hybridantrieb (100V - 500V).

Durch die Verbindungsmittel im Zusammenhang der ihnen zugeordneten Überwachungseinheit ist jeweils sichergestellt, dass der Eingangszweipol mit dem Ausgangszweipol des zutreffenden Bordnetzes verbunden wird. Dabei kann das Verbindungsmittel entweder ein zweipoliges Relais sein oder ein zweipoliger Halbleiterschalter.

Wenn die Überwachungseinrichtung mit den Klemmen des Eingangszweipols verbunden ist, ergibt sich eine einfache Realisierung zur Gewinnung der von der Überwachungseinrichtung zu detektierenden Istspannung. Im Zusammenhang damit steht der Vorteil, dass die Überwachungseinrichtung keinen Ruhestrom verbraucht, da sie unmittelbar aus der externen Quelle bzw. Senke versorgt wird.

Wenn der Überwachungseinrichtung eine Steuereinrichtung für eine Komponente des mindestens einen Verbrauchernetzwerkes zugeordnet ist, ergibt sich die Kommunikationsmöglichkeit der erfindungsgemäßen Vorrichtung mit einem überlagerten Steuergerät des Bordnetzes. Eine solche Komponente kann beispielsweise die Batteriezustandserkennung sein, welche vor der Erteilung der Freigabe der externen Gleichspannungsquelle oder -senke ein Signal erhält, damit sie aktiviert wird. Alternativ dazu kann die Steuereinrichtung mit einem überlagerten Steuergerät zusammen wirken. Dazu ist als eine ebenfalls bevorzugte Option bei der Erfindung vorgesehen, dass eine Stromüberwachung und/oder eine kontinuierliche Überwachung des Klemmenzustands erfolgt, so dass im Fehlerfall die erfindungsgemäße Vorrichtung durch das überlagerte Steuergerät oder die Einrichtung zur Erkennung des Batterieladezustands einen Befehl zur Trennung erhält. Auch erlaubt diese Lösung infolge der Kommunikationsmöglichkeit eine Selbstdiagnose durchzuführen.

Die Erfindung wird im folgenden anhand einer ein Ausführungsbeispiel darstellenden Zeichnung näher erläutert:

Dabei zeigen:

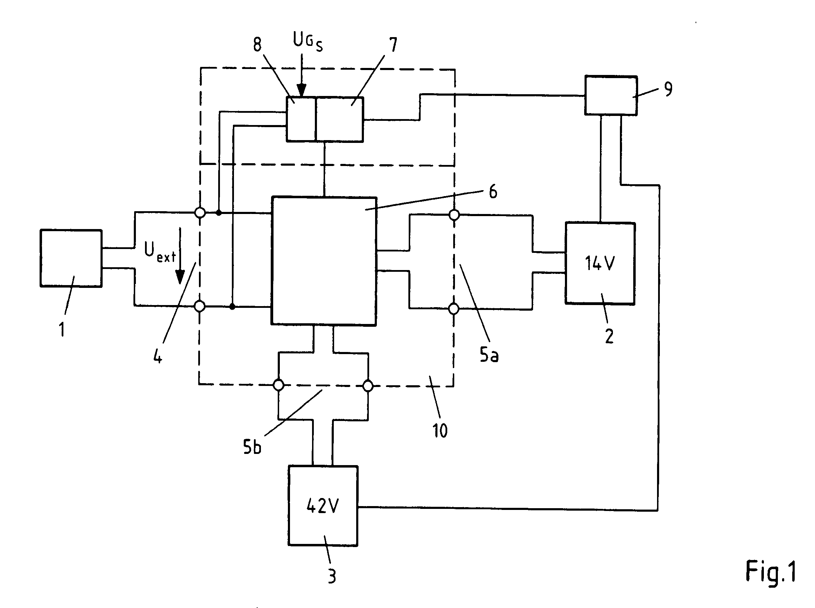

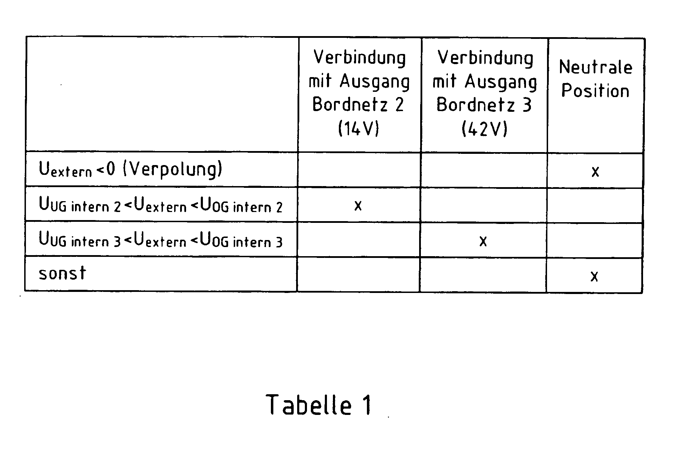

- Fig. 1: ein Blockschaltbild eines Ausführungsbeispieles einer erfindungsgemäßen Vorrichtung
- Tabelle 1: eine Entscheidungsmatrix zur Erläuterung der Funktion der erfindungsgemäßen Vorrichtung.

Bezugnehmend auf Figur 1 ist ein Ausführungsbeispiel für eine Vorrichtung zur elektrischen Verbindung einer Gleichspannungsquelle 1 mit Verbrauchernetzen 2,3 vorgesehen. Als Verbrauchernetze sind hier beispielhaft dargestellt ein 14V-Bordnetz 2 eines Kraftfahrzeuges und ein 42V-Bordnetz 3 eines Kraftfahrzeuges. Die erfindungsgemäße Vorrichtung, allgemein mit dem Bezugszeichen 10 dargestellt, weist einen Eingangszweipol 4 auf, an den die externe Gleichspannungsquelle 1 angeschlossen ist. Jedes der beiden Bordnetze 2, 3 ist an einen zugehörigen Ausgangszweipol 5a bzw. 5b angeschlossen. Eingangszweipol 4 und Ausgangszweipole 5a,5b sind über ein Verbindungsmittel 6 im wie folgenden beschrieben verbindbar. Dabei ist das Verbindungsmittel 6 von einer Überwachungseinrichtung 7 steuerbar, der ein Vergleichsmittel 8 zugeordnet ist und die über entsprechende Zuleitungen mit dem Eingangszweipol 4 verbunden ist. Der Überwachungseinrichtung 7 ist ferner ein Sollwertspeicher für Spannungssollwerte Ugs zugeordnet. Darüber hinaus wirkt die Überwachungseinrichtung 7 mit einer Steuereinrichtung 9 zusammen, die zur Erkennung des Batterieladezustandes im 14V und/oder 42V-Bordnetz dient.

Die erfindungsgemäße Vorrichtung arbeitet wie folgt:

Wenn z.B. eine externe 12V-Batterie 1 mit einer Spannung Uₑₓₜ an den Eingangszweipol 4 angeschlossen wird, erfaßt die Überwachungseinrichtung 7 über die Zuleitungen zum Eingangszweipol 4 die dort vorhandene Klemmenspannung und vergleicht diesen Wert mit abgespeicherten Spannungs-Sollwerten, die allgemein als U_{GS} bezeichnet sind. Liegt dieser Spannungs-Istwert beispielsweise im Intervall zwischen einem oberen und einem unteren Grenzspannungswert U_{OGintern2} bzw. U_{UGintern2}, der für das 14V-Bordnetz zulässig ist, wird durch die Verbindungsmittel 6 der Eingangszweipol 4 mit dem Ausgangszweipol 5a des 14V-Bordnetzes 2 elektrisch verbunden, ohne dass gleichzeitig eine Verbindung zum 42V-Bordnetz 3 erfolgt.

Wenn andererseits als weiteres Beispiel eine Gleichspannungsquelle 1 mit einer Spannung Uₑₓₜ von ca. 42V an den Eingangszweipol 4 angeschlossen wird, prüft die Überwachungseinrichtung 7 ebenso, ob dieser Wert zwischen einem vorgegebenen Toleranzbereich für das 42V-Bordnetz liegt (U_{UGintern3} < Uextern < U_{OGintern3}) und verbindet dementsprechend den Eingangszweipol 4 mit dem Ausgangszweipol 5b des 42V-Bordnetzes 3. Wenn die am Eingangszweipol 4 gemessene Istspannung außerhalb der definierten Toleranzbereiche für das 14 bzw. 42V-Batterienetz liegen, verbleibt der Verbindungszweipol in seiner neutralen Position, das bedeutet, es bleibt bei der hochohmigen Verbindung zwischen Eingangszweipol 4 einerseits und den beiden Ausgangszweipolen 5a, 5b andererseits. Durch die erfindungsgemäße Lösung, insbesondere durch die Prüfung, ob die externe Spannung an dem Eingangszweipol 4 innerhalb des vorgebbaren Toleranzbereichs liegt, eröffnet sich die Möglichkeit, dass nicht nur eine Gleichspannungsquelle sondern auch eine Gleichspannungssenke angeschlossen wird, so dass nicht nur eine Fremdstartnahme sondern auch eine Fremdstartgabe aus dem jeweiligen Bordnetz möglich ist.

## Patentansprüche

1. Vorrichtung zur elektrischen Verbindung einer externe Gleichspannungsquelle (1) oder -senke mit mindestens einem Verbrauchernetz (2, 3) einer jeweils vorgegebenen Spannungsebene (14V, 42V), enthaltend einen Eingangszweipol (4), der mit der externe Gleichspannungsquelle (1) oder -senke verbunden ist, mindestens einen Ausgangszweipol(5a, 5b), welcher jeweils mit dem ihm zugeordneten Verbrauchernetz (2, 3) verbunden ist, und von einer Überwachungseinrichtung (7) gesteuerte Verbindungsmittel (6) zur Verbindung von Eingangsund Aüsgangszweipol, wobei die Überwachungseinrichtung (7) Vergleichsmittel (8) zum Vergleich des am Eingangszweipol (4) anliegenden Spannungsistwertes mit mindestens einem Spannungssollwert (Ugs) derart aufweist, dass nur bei einer innerhalb eines vorgebbaren Toleranzbereichs liegenden Übereinstimmung von Spannungsistwert und Spannungssollwert der Eingangszweipol (4) und der zugehörige Ausgangszweipol (5a, 5b) miteinander verbunden sind, **dadurch** gekenntzeichnet, dass die Überwachungseinrichtung mit dem Eingangszweipol (4) derart verbunden ist, dass die Überwachungseinrichtung unmittelbar aus der externe Gleichspannungsquelle (1) oder -senke versorgt wird.

2. Vorrichtung nach Anspruch 1, **dadurch** gekenntzeichnet, dass das Verbrauchernetz das Bordnetz eines Fahrzeugs, insbesondere eines Kraftfahrzeugs ist.

3. Vorrichtung nach Anspruch 1, **dadurch gekennzeichnet, dass** das Verbrauchernetz das 14V-Bordnetz eines Fahrzeugs ist.

4. Vorrichtung nach Anspruch 1, **dadurch gekennzeichnet, dass** das Verbrauchernetz das 42V-Bordnetz eines Fahrzeugs ist.

5. Vorrichtung nach Anspruch 1, **dadurch** gekenntzeichnet, dass ein Bordnetz mit mehreren Spannungsebenen, insbesondere eine duales Bordnetz mit einem ersten Verbrauchernetz mit 42V und einem zweiten Verbrauchernetz mit 14V vorgesehen ist.

6. Vorrichtung nach Anspruch 1, **dadurch gekennzeichnet, dass** das Verbindungsmittel (6) ein zweipoliges Relais ist.

7. Vorrichtung nach Anspruch 1, **dadurch gekennzeichnet, dass** das Verbindungsmittel (6) ein zweipoliger Halbleiterschalter ist.

8. Vorrichtung nach Anspruch 1, **dadurch gekennzeichnet, dass** das die Überwachungseinrichtung (7) mit den Klemmen des Eingangszweipols (4) verbunden ist.

9. Vorrichtung nach Anspruch 1, **dadurch gekennzeichnet, dass** der Toleranzbereich definiert ist durch eine untere und eine obere Spannungsgrenze für das jeweilige 14V oder 42V-Bordspannungsnetz.

10. Vorrichtung nach Anspruch 1, **dadurch gekennzeichnet, dass** der Überwachungseinrichtung (7) eine Steuereinrichtung (9) für eine Komponente des mindestens einen Verbrauchernetzwerks (2, 3) zugeordnet ist.

11. Vorrichtung nach Anspruch 10, **dadurch gekennzeichnet, dass** die Steuereinrichtung (9) mit einer Einrichtung zur Erkennung des Batterieladezustands zusammen wirkt.

12. Vorrichtung nach Anspruch 10, **dadurch gekennzeichnet, dass** die Steuereinrichtung (9) mit einem überlagerten Steuergerät zusammen wirkt.

13. Verfahren zur elektrischen Verbindung einer externe Gleichspannungsquelle oder Gleichspannungssenke mit mindestens einem Verbrauchernetz einer jeweils vorgegebenen Spannungsebene, bei dem die externe Gleichspannungsquelle oder Gleichspannungssenke mit einem Eingangszweipol verbunden wird, von einer Überwachungseinrichtung die am Eingangszweipol anliegenden Ist-Spannung gemessen und mit mindestens einem Spannungssollwert verglichen wird und bei einer innerhalb eines vorgebbaren Toleranzbereichs liegenden Übereinstimmung von Spannungsistwert und Spannungssollwert der Eingangszweipol mit einem Ausgangszweipol verbunden wird, welcher jeweils mit dem ihm zugeordneten Verbrauchernetz verbunden ist, **dadurch gekennzeichnet, dass** die Überwachungseinrichtung mit dem Eingangszweipol derart verbunden wird, dass die Überwachungseinrichtung unmittelbar aus der externe Gleichspannungsquelle odersenke versorgt wird.

## Claims

1. Arrangement for the electrical connection of an external D.C. voltage source (1) or sink to at least one system of loads (2, 3), the voltage level (14V, 42V) of which system of loads (2, 3) is in each case preset, comprising an input two-terminal element (4) which is connected to the external D.C. voltage source (1) or sink, at least one output two-terminal element (5a, 5b) which is connected to the respective system of loads (2, 3) associated with it, and connecting means (6), controlled by a monitoring means (7), for connecting the input two-terminal element and the output two-terminal element, the monitoring means (7) having comparing means (8) for comparing the actual value of the voltage applied to the input two-terminal element (4) with at least one desired value for voltage (Ugs), such that the input two-terminal element (4) and the associated output two-terminal element (5a, 5b) are only connected together if there is a match, to within a presettable tolerance range, between the actual value of voltage and the desired value for voltage, **characterised in that** the monitoring means is connected to the input two-terminal element (4) in such a way that the monitoring means is supplied directly from the external D.C. voltage source (1) or sink.

2. Arrangement according to claim 1, **characterised in that** the system of loads is the electrical system of a vehicle, and in particular of a motor vehicle.

3. Arrangement according to claim 1, **characterised in that** the system of loads is the 14V electrical system of a vehicle.

4. Arrangement according to claim 1, **characterised in that** the system of loads is the 42V electrical system of a vehicle.

5. Arrangement according to claim 1, **characterised in that** an electrical system having a plurality of levels of voltage is provided, and in particular a dual electrical system having a first 42V system of loads and a second 14V system of loads.

6. Arrangement according to claim 1, **characterised in that** the connecting means (6) is a two-pole relay.

7. Arrangement according to claim 1, **characterised in that** the connecting means (6) is a two-pole semiconductor switch.

8. Arrangement according to claim 1, **characterised in that** the monitoring means (7) is connected to the terminals of the input two-terminal element (4).

9. Arrangement according to claim 1, **characterised in that** the tolerance range is defined by a lower and an upper voltage limit for, respectively, the 14V or 42V electrical system voltage.

10. Arrangement according to claim 1, **characterised in that** the monitoring means (7) has associated with it a control means (9) for a component of the at least one network of loads (2, 3).

11. Arrangement according to claim 10, **characterised in that** the control means (9) co-operates with a means for detecting the state of charge of a battery.

12. Arrangement according to claim 10, **characterised in that** the control means (9) co-operates with a master control unit.

13. Method for the electrical connection of an external D.C. voltage source or D.C. voltage sink to at least one system of loads, the voltage level of which system of loads is in each case preset, in which the external D.C. voltage source or D.C. voltage sink is connected to an input two-terminal element, the actual voltage applied to the input two-terminal element is measured by a monitoring means and is compared by it with at least one desired value for voltage, and, if there is a match, within a presettable tolerance range, between the actual value of voltage and the desired value for voltage, the input two-terminal element is connected to an output two-terminal element which is connected to the respective system of loads associated with it, **characterised in that** the monitoring means is connected to the input two-terminal element in such a way that the monitoring means is supplied directly from the external D.C. voltage source or sink.

## Revendications

1. Dispositif pour la connexion électrique d'une source de tension continue (1) externe ou d'un puits de tension continue, avec au moins un réseau consommateur (2, 3) d'un niveau de tension (14V, 42V) chaque fois prédéterminé, comprenant un dipôle d'entrée (4), qui est connecté à la source de tension continue (1) externe ou au puits de tension continue, au moins un dipôle de sortie (5a, 5b), qui est relié au réseau consommateur (2, 3), qui lui est associé, et des moyens de connexion (6), commandés par un dispositif de surveillance (7), pour la connexion du dipôle d'entrée et du dipôle de sortie, le dispositif de surveillance (7) présentant des moyens de comparaison (8), pour l'établissement de la comparaison entre la valeur de tension réelle, appliquée au dipôle d'entrée (4), et au moins une tension continué de consigne (Ugs), de sorte que le dipôle d'entrée (4) et le dipôle de sortie (5a, 5b) y associé ne soient connectés que lors d'une concordance entre la valeur de tension continue réelle et la tension continue de consigne, dans une plage de tolérances, qui peut être prédéterminée, **caractérisé en ce que** le dispositif de surveillance est connecté au dipôle d'entrée (4) de sorte que le dispositif de surveillance soit alimenté directement par la source de tension continue (1) externe ou le puits de tension continue.

2. Dispositif selon la revendication 1, **caractérisé en ce que** le réseau consommateur est le réseau embarqué d'un véhicule, en particulier d'un véhicule automobile.

3. Dispositif selon la revendication 1, **caractérisé en ce que** le réseau consommateur est le réseau embarqué à 14 V d'un véhicule.

4. Dispositif selon la revendication 1, **caractérisé en ce que** le réseau consommateur est le réseau embarqué à 42 V d'un véhicule.

5. Dispositif selon la revendication 1, **caractérisé en ce qu'**est prévu un réseau embarqué à plusieurs niveaux de tension, en particulier un réseau embarqué dual, avec un premier réseau consommateur à 42 V et un deuxième réseau consommateur à 14 V.

6. Dispositif selon la revendication 1, **caractérisé en ce que** le moyen de connexion (6) est un relais bipolaire.

7. Dispositif selon la revendication 1, **caractérisé en ce que** le moyen de connexion (6) est un relais bipolaire à semi-conducteur.

8. Dispositif selon la revendication 1, **caractérisé en ce que** le dispositif de surveillance (7) est connecté aux bornes du dipôle d'entrée (4).

9. Dispositif selon la revendication 1, **caractérisé en ce que** la plage de tolérances est définie par une limite de tension inférieure et une limite de tension supérieure pour le réseau embarqué respectif à 14 V ou à 42 V.

10. Dispositif selon la revendication 1, **caractérisé en ce qu'**au dispositif de surveillance (7) est associé un dispositif de commande (9) pour un composant du réseau consommateur (2, 3) au moins prévu.

11. Dispositif selon la revendication 10, **caractérisé en ce que** le dispositif de commande (9) coopère avec une installation de détection de l'état de batterie.

12. Dispositif selon la revendication 10, **caractérisé en ce que** le dispositif de commande (9) coopère avec un appareil de commande superposé.

13. procédé pour la connexion électrique d'une source de tension continue externe ou d'un puits de tension continue, avec au moins un réseau consommateur (2, 3) à niveau de tension chaque fois prédéterminé, dans lequel la source de tension continue externe ou le puits de tension continue est relié/e à un dipôle d'entrée, la tension réelle, appliquée au dipôle d'entrée est mesurée par un dispositif de surveillance et est comparée à au moins une valeur de consigne, et, lors d'une concordance entre la valeur réelle de tension et la valeur de consigne, dans une plage de tolérances, qui peut être prédéterminé, le dipôle d'entrée peut être connecté au dipôle de sortie, qui est respectivement connecté au réseau consommateur, qui lui est associé, **caractérisé en ce que** le dispositif de surveillance est connecté au dipôle d'entrée de sorte que ledit dispositif de surveillance soit alimenté directement à partir de la source externe de tension continue ou du puits de tension continue.
